# EUROPÄISCHE PATENTSCHRIFT

(11) **EP 0 654 453 B1**
(45) Veröffentlichungstag und Bekanntmachung des Hinweises auf die Patenterteilung: **09.04.1997**
(21) Anmeldenummer: 94116290.1
(22) Anmeldetag: 15.10.1994
(51) Int. Cl.: C03C 25/02, B05C 3/12

(54) **Vorrichtung zum Beschichten einer optischen Faser**
Apparatus for coating an optical fiber
Appareil pour le revêtement d'une fibre optique

(30) Priorität: 18.11.1993 DE 9317617 U
(43) Veröffentlichungstag der Anmeldung: 24.05.1995
(73) Patentinhaber: KABEL RHEYDT Aktiengesellschaft, D-41179 Mönchengladbach (DE)
(72) Erfinder: Lysson, Hans-Jürgen, Dipl.-Ing., D-41352 Korschenbroich (DE); Broden, Rainer, D-41063 Mönchengladbach (DE); Leppert, Hans-Detlef, Dr., D-41189 Mönchengladbach (DE)
(74) Vertreter: Mende, Eberhard, Dipl.-Ing.

(56) Entgegenhaltungen:
- EP-A- 0 462 951
- DE-A- 3 832 838
- GB-A- 2 179 270
- US-A- 4 510 884
- US-A- 4 688 515

## Beschreibung

Die Erfindung geht aus von einer Vorrichtung zum Beschichten einer optischen Faser mit einem eine Längsbohrung aufweisenden Gehäuse und einem in dieser Längsbohrung angeordneten, eine Aufnahmebohrung aufweisenden Düsenhalter. Eine Einlaufdüse mit einer ersten Düsenbohrung und eine Auslaufdüse mit einer zweiten Düsenbohrung, durch die die optische Faser hindurchführbar ist, sind mit Abstand hintereinander in der Aufnahmebohrung des Düsenhalters angeordnet. Zwischen der Einlaufdüse und der Auslaufdüse ist ein Beschichtungsraum zum Aufbringen eines Beschichtungsmaterials auf die optische Faser gebildet.

Eine solche Vorrichtung zum Beschichten einer optischen Faser wird beispielsweise bei der Weiterverarbeitung einer aus einer Glasvorform, einer sogenannten Preform, gezogenen Glasfaser für die Nachrichtenübermittlung verwendet. Bereits die Führung der Glasfaser über Umlenkrollen macht es erforderlich, daß die Faser beschichtet wird, um sie so vor Beschädigungen zu schützen. Zu diesem Zweck werden ein oder mehrere Überzüge, beispielsweise aus einem polymeren Material, auf den Mantel der Glasfaser aufgebracht, wobei beim Aufbringen mehrerer Schichten diese sich regelmäßig in ihren mechanischen Eigenschaften unterscheiden.

Bei bekannten Vorrichtungen zum Beschichten einer optischen Faser sind die in der Aufnahmebohrung des Düsenhalters angeordneten Düsen mittels jeweils eines Dichtringes in der Aufnahmebohrung fixiert und in radialer Richtung abgedichtet. Die Dichtringe sind beispielsweise in einer an dem Umfang der Einlaufdüse bzw. der Auslaufdüse ausgebildeten umlaufenden Nut angeordnet. Der Düsenhalter seinerseits ist ebenfalls mit in radialer Richtung wirkenden Dichtringen in der Langsbohrung des Gehäuses fixiert. Dabei erfordern die auf diese Weise gebildeten Abdichtungen zwischen jeweils zwei benachbarten Bauteilen ein radiales Spiel der beiden Bauteile zueinander, also der Einlaufdüse bzw. der Auslaufdüse gegenüber der Aufnahmebohrung sowie des Düsenhalters gegenüber der Längsbohrung des Gehäuses, das z. B. etwa 0,01 mm beträgt.

Die EP-A-0 462 951 offenbart eine Vorrichtung mit einem konischen Düsenhalter in einem Gehäuseteil mit konischer Bohrung, in dessen zylindrischer Bohrung die Auslaufdüse eingepreßt ist, während die Einlaufdüse mittels eines Überwurfschraubdeckels in dessen konischen Bohrungsteil lose fixiert wird.

Dieses radiale Spiel zwischen in radialer Richtung gegeneinander abgedichteten Bauteilen hat den Nachteil einer schlechten Reproduzierbarkeit bei jeder z. B. nach einem Austausch der Düsen neuen Zusammenstellung und jedem Zusammenbau der Bauteile der Vorrichtung, da die sich durch das erforderliche radiale Spiel ergebenden Toleranzen die zulässigen Fertigungstoleranzen der Einlauf- und der Auslaufdüse und damit der Beschichtung der optischen Faser unter Umständen um ein Vielfaches übersteigen können. Bei der bekannten Vorrichtung zum Beschichten einer optischen Faser ist also das gleichmäßige Aufbringen einer Beschichtung mit definierter Dicke nicht immer gewährleistet.

Ausgehend von diesem Stand der Technik liegt der Erfindung daher das Problem zugrunde, eine Vorrichtung zum Beschichten einer optischen Faser derart auszubilden, daß eine gut reproduzierbare Positionierung der Einlaufdüse und der Auslaufdüse im Düsenhalter sowie des Düsenhalters im Gehäuse und auf diese Weise eine gleichmäßige Aufbringung einer Beschichtung auf die Faser gewährleistet ist.

Dieses Problem wird gemäß Anspruch 1 gelöst, indem der Düsenhalter in die Längsbohrung des Gehäuses eingepreßt ist und die Einlaufdüse und die Auslaufdüse in die Aufnahmebohrung des Düsenhalters eingepreßt sind.

Die mit der Erfindung erzielbaren Vorteile bestehen insbesondere darin, daß durch die Preßsitze der Düsen in dem Düsenhalter und des Düsenhalters in dem Gehäuse das Radialspiel zwischen den Düsen und dem Düsenhalter sowie zwischen dem Düsenhalter und dem Gehäuse der erfindungsgemäßen Vorrichtung eliminiert und eine wirkungsvolle radiale Abdichtung zwischen diesen Bauteilen hergestellt ist. Auf diese Weise werden nach einer neuen Zusammenstellung der Bauteile z. B. nach einem Austausch der Düsen oder bei einem nach einer Reinigung erfolgenden erneuten Zusammenbau der erfindungsgemäßen Vorrichtung eine gut reproduzierbare Positionierung der Einlaufdüse und der Auslaufdüse im Düsenhalter sowie des Düsenhalters im Gehäuse und eine nahezu völlige Parallelität und Konzentrizität der Längsbohrung des Gehäuses, der Aufnahmebohrung des Düsenhalters und der Düsenbohrungen der beiden Düsen erzielt. Durch die mit hoher Genauigkeit zueinander fluchtenden Düsenbohrungen der beiden Düsen wird eine gleichmäßige Beschichtung der optischen Faser unter Einhaltung einer vorgegebenen Beschichtungsdicke erreicht.

Durch die in den Unteransprüchen aufgeführten Maßnahmen sind vorteilhafte Weiterbildungen und Verbesserungen der Erfindung möglich.

Um das Ein- und Auspressen des Düsenhalters in die bzw. aus der Längsbohrung des Gehäuses mit geringem Kraftaufwand z. B. manuell zu ermöglichen, ist es vorteilhaft, wenn der Düsenhalter aus einem Werkstoff mit niedriger Gleitreibungszahl ausgebildet ist.

Aus dem gleichen Grund ist es ebenfalls vorteilhaft, wenn das Gehäuse im Bereich der Längsbohrung zumindest in dem Abschnitt des Ein- und Auspressens des Düsenhalters aus einem Werkstoff mit niedriger Gleitreibungszahl ausgebildet ist.

Für ein einfaches Ein- und Auspressen der Einlaufdüse und der Auslaufdüse in die bzw. aus der Aufnahmebohrung des Düsenhalters ist es auch von Vorteil, wenn die Einlaufdüse und die Auslaufdüse zumindest an ihrem Umfang aus einem Werkstoff mit niedriger Gleitreibungszahl ausgebildet sind.

Dabei ist es vorteilhaft, wenn es sich bei dem Werkstoff mit niedriger Gleitreibungszahl um einen elastischen Kunststoff, vorteilhafterweise um PTFE handelt, so daß ein einfaches Ein- und Auspressen der Düsen aus dem Düsenhalter und des Düsenhalters aus dem Gehäuse gewährleistet ist. Die Verwendung eines elastischen Kunststoffes bewirkt darüberhinaus eine gute Abdichtung in radialer Richtung zwischen den Düsen und dem Düsenhalter und/oder zwischen dem Düsenhalter und dem Gehäuse, so daß ein Entweichen von gegebenenfalls unter einem hohen Druck stehenden Beschichtungsmaterial vermieden wird.

Besonders vorteilhaft ist es, wenn in Durchlaufrichtung der Faser vor der Einlaufdüse eine Streulichtblende in die Aufnahmebohrung des Düsenhalters eingepreßt ist, durch deren Blendenöffnung die Faser hindurchführbar ist. Durch diese Streulichtblende wird eine unerwünschte Vorvernetzung und/oder Vor-Aushärtung von für die Beschichtung der Faser verwendetem UV-empfindlichen Beschichtungsmaterial insbesondere in der ersten Düsenöffnung der Einlaufdüse nahezu ausgeschlossen und die Gefahr von Störungen im Prozeßablauf reduziert.

Für eine besonders wirkungsvolle Reduzierung des Streulichteinflusses ist es vorteilhaft, wenn der Durchmesser der Blendenöffnung der Streulichtblende an ihrer engsten Stelle kleiner ist als der Durchmesser der ersten Düsenbohrung der Einlaufdüse an ihrer engsten Stelle und größer ist als der Durchmesser der zweiten Düsenbohrung der Auslaufdüse an ihrer engsten Stelle.

Vorteilhaft ist es, wenn die Vorrichtung durch in axialer Richtung wirkende Dichtringe nach außen hin abgedichtet ist. Auf diese Weise ist gewährleistet, daß das gegebenenfalls unter einem hohen Druck stehende Beschichtungsmaterial nicht aus der erfindungsgemäßen Vorrichtung entweichen kann.

Ausführungsbeispiele der Erfindung sind in der Zeichnung vereinfacht dargestellt und in der nachfolgenden Beschreibung näher erläutert.

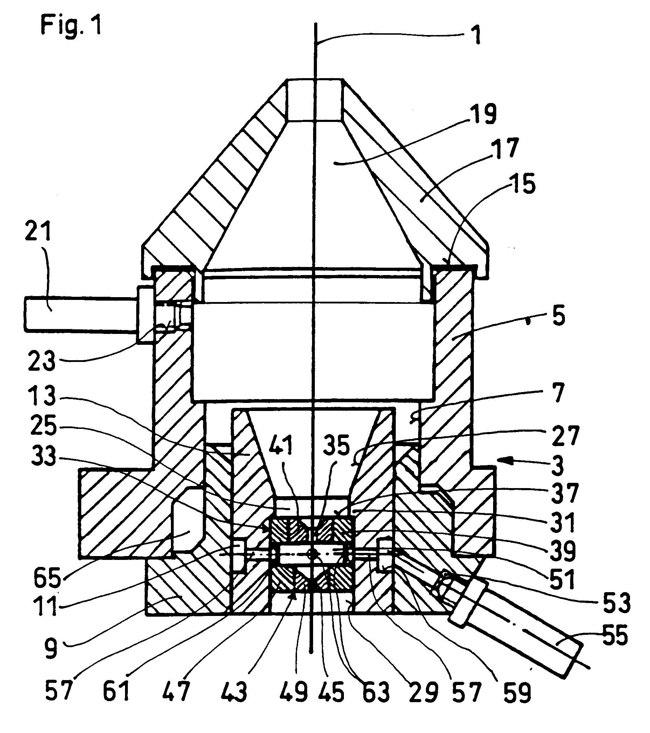

Die in der Figur 1 beispielhaft dargestellte Vorrichtung zum Beschichten einer optischen Faser 1, z. B. einer aus einer Glasvorform gezogenen optischen Glasfaser, weist ein Gehäuse 3 auf. Das Gehäuse 3 besteht beispielsweise aus einem rohrförmigen Zylinderteil 5 mit einer gestuften Durchgangsbohrung 7. In ein Ende dieser gestuften Durchgangsbohrung 7 ist ein rohrförmiges, an seinem Umfang z. B. gestuft ausgebildetes Aufnahmeteil 9 in axialer Richtung teilweise eingeschoben. Beispielsweise konzentrisch zu der Durchlaufrichtung der optischen Faser 1 durch die Vorrichtung weist das Aufnahmeteil 9 eine durchgehende Längsbohrung 11 auf, in die ein rohrförmiger Düsenhalter 13 eingepreßt ist. Auf eine an dem dem Aufnahmeteil 9 abgewandten Ende des Zylinderteils 5 gebildete Stirnseite 15 ist eine etwa kegelstumpfförmige Gaskappe 17 aufgesetzt. Dabei erweitern sich die kegelstumpfförmige Gaskappe 17 sowie eine in ihr ausgebildete Durchgangsbohrung 19 in Durchlaufrichtung der Faser 1 durch die Vorrichtung. So läuft die zu beschichtende optische Faser 1 durch die z. B. konzentrisch zu der durchlaufenden Faser 1 ausgebildete Durchgangsbohrung 19 der Gaskappe 17 in die Vorrichtung ein und tritt an dem der Gaskappe 17 abgewandten Ende des Gehäuses 3 aus der Vorrichtung im beschichteten Zustand heraus.

Z. B. an dem der Gaskappe 17 zugewandten Ende des Zylinderteils 5 ist ein Gaszufuhrstutzen 21 in eine sich durch die Wandung des Zylinderteils hindurch erstreckende Gewindebohrung 23 eingeschraubt. Durch den Gaszufuhrstutzen 21 ist beispielsweise ein Gas geringer kinematischer Viskosität in die Durchgangsbohrung 7 des Zylinderteils 5 zuführbar. Durch das zugeführte Gas werden die von der optischen Faser 1 mitgeführte Luft sowie gegebenenfalls an der Faser anhaftende Partikel im Gegenstromverfahren abgestreift.

Der Düsenhalter 13 und/oder das Aufnahmeteil 9 bestehen beispielsweise aus einem elastischen, aber nicht gummielastischen Kunststoff mit niedriger Gleitreibungszahl wie z. B. PTFE (Polytetrafluorethylen), so daß ein leichtes manuelles Ein- und Auspressen des Düsenhalters 13 in die bzw. aus der Längsbohrung 11 des Aufnahmeteils 9 ermöglicht sowie eine gute Abdichtung in radialer Richtung zwischen Düsenhalter 13 und Aufnahmeteil 9 gewährleistet wird.

Z. B. konzentrisch zu der Durchlaufrichtung der Faser 1 erstreckt sich in dem Düsenhalter 13 eine durchgehende, gestufte Aufnahmebohrung 25. An ihrem der Gaskappe 17 zugewandten Ende hat die Aufnahmebohrung 25 einen sich in Durchlaufrichtung der Faser 1 kegelstumpfförmig verjüngenden Trichterabschnitt 27 und der Gaskappe 17 abgewandt einen Parallelabschnitt 29. In Durchlaufrichtung der optischen Faser 1 zwischen dem Trichterabschnitt 27 und dem Parallelabschnitt 29 ist in der Aufnahmebohrung 25 ein in radialer Richtung nach innen weisender, eine kleinere lichte Weite als der Parallelabschnitt 29 aufweisender Halteabsatz 31 ausgebildet. In den Parallelabschnitt 29 der Aufnahmebohrung 25 des Düsenhalters 13 ist eine Einlaufdüse 33 mit einer Düsenbohrung 35 z. B. derart eingepreßt, daß sie mit ihrer einen Stirnseite 37 an dem Halteabsatz 31 der Aufnahmebohrung 25 anliegt. Die Einlaufdüse 33 ist beispielweise aus einem äußeren Haltering 39 aus einem elastischen Kunststoff mit niedriger Gleitreibungszahl sowie einem von dem Haltering 39 umschlossenen Düseneinsatz 41 gebildet. Der hierbei verwendete Kunststoff sollte deutlich elastischer als Stahl, aber nicht gummielastisch sein. In Durchlaufrichtung der Faser 1 mit Abstand hinter der Einlaufdüse 33 ist eine Auslaufdüse 43 mit einer Düsenbohrung 45 in den Parallelabschnitt 29 der Aufnahmebohrung 25 eingepreßt, wobei die Düsenbohrung 35 der Einlaufdüse 33 und die Düsenbohrung 45 der Auslaufdüse 43 miteinander fluchten. Beispielsweise ebenso wie die Einlaufdüse 33 besteht auch die Auslaufdüse 43 aus einem äußeren Haltering 47 aus einem elastischen Kunststoff mit niedriger Gleitreibungszahl und einem von dem äußeren Haltering 47 umschlossenen Düseneinsatz 49. Die aus einem elastischen Werkstoff mit niedriger Gleitreibungszahl ausgebildeten Halteringe 39 und 47 ermöglichen ein einfaches Ein- und Auspressen der Düsen 33 und 43 in die bzw. aus der Aufnahmebohrung 25 des Düsenhalters 13. Die Elastizität der Halteringe 39 und 47 gewährleistet eine gute Abdichtung in radialer Richtung zwischen dem Umfang der Einlaufdüse 33 bzw. der Auslaufdüse 43 und der Wandung der Aufnahmebohrung 25. Als Werkstoff für die Halteringe 39 und 47 eignet sich z. B. PTFE (Polytetrafluorethylen).

In axialer Richtung zwischen der Einlaufdüse 33 und der Auslaufdüse 43 ist eine Beschichtungskammer 51 zum Aufbringen eines Beschichtungsmaterials auf die optische Faser 1 gebildet. In diese kann über einen in eine gestufte Gewindebohrung 53 des Aufnahmeteils 9 eingeschraubten Lackzufuhrstutzen 55 das zur Beschichtung der Faser 1 dienende und unter Druck stehende flüssige Beschichtungsmaterial z. B. in Form eines unter Einfluß von UV-Strahlung vernetzbaren und/oder aushärtbaren Kunststofflackes eingebracht werden. Zur gleichmäßigen Zufuhr des Beschichtungsmaterials in die Beschichtungskammer 51 sind in dem Düsenhalter 13 z. B. vier in radialer Richtung verlaufende Kanäle 57 ausgebildet. An dem Umfang des Düsenhalters 13 ist im Bereich der Kanäle 57 eine mit der Gewindebohrung 53 in Verbindung stehende umlaufende Ringnut 59 vorgesehen. In axialer Richtung zwischen der Einlaufdüse 33 und der Auslaufdüse 43 ist in der Aufnahmebohrung 25 eine Ringdüse 61 mit mit den Kanälen 57 in Verbindung stehenden Zufuhrbohrungen 63 angeordnet. Durch die Gewindebohrung 53, die Ringnut 59, die Kanäle 57 und die Zufuhrbohrungen 63 der Ringdüse 61 gelangt das flüssige Beschichtungsmaterial in die Beschichtungskammer 51. Über die Ringdüse 61 und die Einlaufdüse 33 stützt sich die Auslaufdüse 43 in axialer Richtung an dem Halteabsatz 31 der Aufnahmebohrung 25 des Düsenhalters 13 ab.

Auf diese Weise wird z. B. bei einem nach einer Reinigung oder einem Austausch der Düsen 33, 43 erforderlichen neuen Zusammenbau der erfindungsgemäßen Vorrichtung eine gute Reproduzierbarkeit des Aufbaus mit einer nahezu vollständigen Parallelität und Konzentrizität der Düsenbohrung 35 der Einlaufdüse 33 und der Düsenbohrung 45 der Auslaufdüse 43 sowie eine Eliminierung des Radialspiels ermöglicht. Hierdurch ergibt sich eine besonders gleichmäßige, definierte Beschichtungsdicke der optischen Faser 1.

Zwischen dem Aufnahmeteil 9 und dem Zylinderteil 5 des Gehäuses 3 ist z. B. eine Kammer 65 vorgesehen, die die Temperierung des Beschichtungsmaterials mittels eines flüssigen Mediums und damit das Einhalten eines vorgegebenen Temperaturniveaus des Beschichtungsmaterials in der Beschichtungskammer 51 ermöglicht.

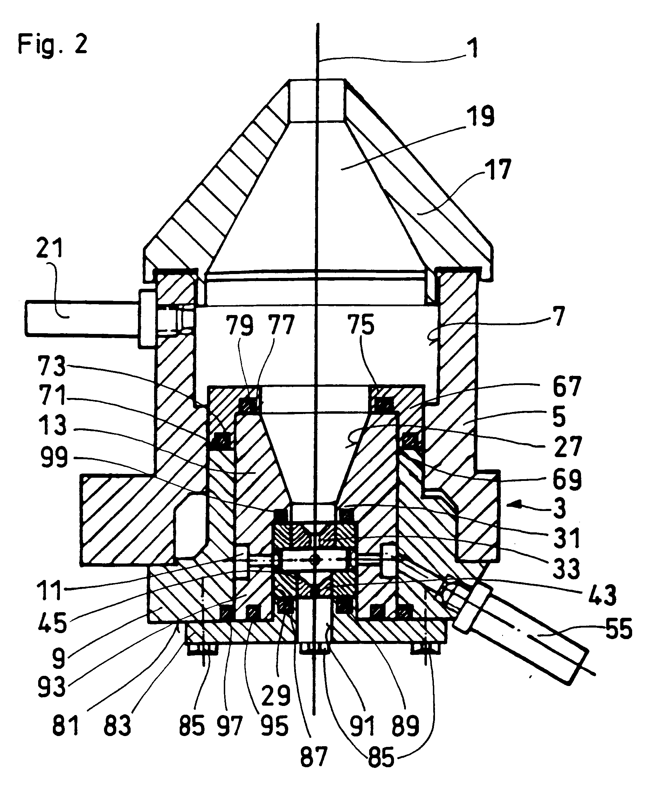

Für den Fall einer nicht ausreichenden Dichtwirkung durch das Einpressen der Düsen 33 und 43 in den Düsenhalter 13 und des Düsenhalters in das Aufnahmeteil 9 ist es möglich, die erfindungsgemäße Vorrichtung durch das Vorsehen von in axialer Richtung wirkenden Dichtringen nach außen hin abzudichten, um so ein Entweichen des gegebenenfalls unter Druck stehenden Beschichtungsmaterials zu verhindern. In der Fig. 2 ist ein zweites Ausführungsbeispiel einer erfindungsgemäßen Vorrichtung mit in axialer Richtung wirkenden Dichtringen dargestellt. Dabei entspricht dieses zweite Ausführungsbeispiel im wesentlichen dem in der Fig. 1 dargestellten ersten Ausführungsbeispiel.

In radialer Richtung zwischen dem Umfang des Düsenhalters 13 und der Wandung der Durchgangsbohrung 7 des Zylinderteils 5 ist ein ringförmiges Zwischenteil 67 angeordnet, das mit einer der Gaskappe 17 abgewandten unteren Stirnseite 69 einer der Gaskappe 17 zugewandten Stirnseite 71 des Aufnahmeteils 9 z. B. mit geringem Abstand gegenüberliegt. An dieser Stelle ist zwischen dem Zwischenteil 67 und dem Aufnahmeteil 9 beispielsweise in einer Ringnut des Zwischenteils ein Dichtring 73 angeordnet. Der Gaskappe 17 zugewandt hat das Zwischenteil 67 einen in radialer Richtung nach innen weisenden Halteabschnitt 75, an dem der Düsenhalter 13 mit einer einlaufseitigen Stirnseite 77 z. B. anliegt. Düsenhalter 13 und Halteabschnitt 75 können sich aber auch mit geringem Abstand gegenüberliegen. In axialer Richtung zwischen dem Halteabschnitt 75 des Zwischenteils 67 und der Stirnseite 77 des Düsenhalters 13 liegt beispielsweise in einer Ringnut des Halteabschnitts ein Dichtring 79.

An einer dem Zwischenteil 67 abgewandten unteren Stirnseite 81 des Aufnahmeteils 9 ist ein Gehäusedeckel 83 z. B. mittels vier Befestigungsschrauben 85 mit dem Aufnahmeteil 9 verbunden. Konzentrisch zu der Düsenbohrung 45 der Auslaufdüse 43 weist der Gehäusedeckel 83 eine sich durch den Gehäusedeckel hindurch erstreckende Durchgangsbohrung 91 auf. Der Gehäusedeckel 83 hat konzentrisch zu der durchlaufenden Faser 1 einen zylindrischen Zentrierabschnitt 87, mit dem der Gehäusedeckel 83 in den Parallelabschnitt 29 der Aufnahmebohrung 25 des Düsenhalters 13 ragt und der sich beispielsweise in axialer Richtung bis nahe an die Auslaufdüse 43 erstreckt oder an der Auslaufdüse anliegt. Dabei ist z. B. in axialer Richtung zwischen der Auslaufdüse 43 und dem Zentrierabschnitt 87 des Gehäusedeckels 83 in einer Ringnut des Zentrierabschnittes 87 ein Dichtring 89 vorgesehen.

Ferner sind beispielsweise in axialer Richtung zwischen dem der Stirnseite 77 abgewandten Ende 93 des Düsenhalters 13 und dem Gehäusedeckel 83 in einer Ringnut des Düsenhalters ein Dichtring 95 und zwischen dem Aufnahmeteil 9 und dem Gehäusedeckel 83 in einer Ringnut des Aufnahmeteils ein Dichtring 97 vorgesehen. Beispielsweise in axialer Richtung dem Gehäusedeckel 83 abgewandt ist zwischen der Einlaufdüse 33 und dem in radialer Richtung nach innen weisenden Halteabsatz 33 der Aufnahmebohrung 25 des Düsenhalters 13 ein in einer Ringnut des Halteabsatzes angeordneter Dichtring 99 vorgesehen.

Selbstverständlich ist es nicht erforderlich, stets an allen dargestellten und beschriebenen Stellen solche in axialer Richtung wirkenden Dichtringe anzuordnen. Es ist in der Praxis vielmehr im Einzelfall zu prüfen, an welchen Stellen der erfindungsgemäßen Vorrichtung Dichtringe erforderlich sind.

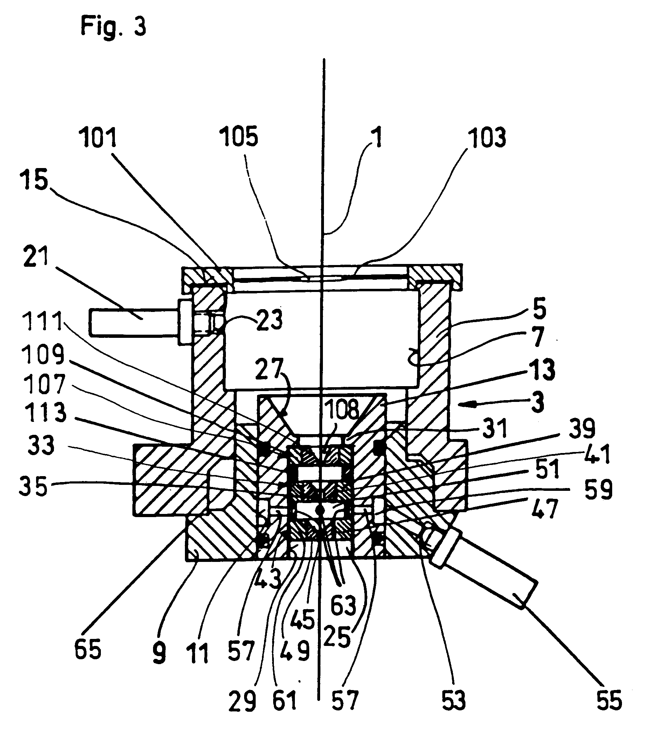

In der Fig. 3 ist ein drittes Ausführungsbeispiel einer erfindungsgemäßen Vorrichtung dargestellt, bei der an der dem Aufnahmeteil 9 abgewandten Stirnseite 15 des Zylinderteils 5 beispielsweise ein ringförmiges Trägerteil 101 mit einer die Durchgangsbohrung 7 des Zylinderteils 5 abschließenden Irisblende 103 angeordnet ist. Dabei läuft die zu beschichtende optische Faser 1 durch eine z. B. zu der Aufnahmebohrung 25 des Düsenstockes 13 konzentrische Irisöffnung 105 der Irisblende 103 in die Vorrichtung ein und tritt an dem der Irisblende 103 abgewandten Ende des Gehäuses 3 aus der Vorrichtung im beschichteten Zustand heraus.

In Durchlaufrichtung der Faser 1 durch die erfindungsgemäße Vorrichtung in einem vergleichsweise kleinen Abstand von z. B. etwa 2 bis 7 mm vor der Einlaufdüse 33 ist beispielsweise in dem Parallelabschnitt 29 der gestuften Aufnahmebohrung 25 des Düsenstockes 13 eine Streulichtblende 107 angeordnet.

Durch deren zur Durchlaufrichtung der Faser 1 konzentrische, sich in Durchlaufrichtung verjüngende Blendenöffnung 108 läuft die zu beschichtende optische Faser 1 hindurch. Die Streulichtblende 107 ist beispielsweise aus einem äußeren Haltering 109 aus einem elastischen Kunststoff mit niedriger Gleitreibungszahl wie z. B. PTFE sowie aus einem von dem Haltering 109 umschlossenen Blendeneinsatz 111 gebildet und in die Aufnahmebohrung 25 eingepreßt. Dabei liegt die Streulichtblende 107 z. B. mit ihrer der Einlaufdüse 33 abgewandten Stirnseite an dem Halteabsatz 31 der Aufnahmebohrung 25 an.

Der Durchmesser der zu der ersten Düsenbohrung 35 der Einlaufdüse 33 fluchtenden Blendenöffnung 108 der Streulichtblende 107 ist an ihrer engsten Stelle beispielsweise kleiner als der Durchmesser der ersten Düsenbohrung 35 an ihrer engsten Stelle, aber größer als der Durchmesser der zweiten Düsenbohrung 45 der Auslaufdüse 43 an ihrer engsten Stelle. So kann z. B. der Durchmesser der ersten Düsenbohrung 35 der Einlaufdüse 33 an ihrer engsten Stelle 500 µm, der Durchmesser der Blendenöffnung 108 der Streulichtblende 107 an ihrer engsten Stelle 400 µm und der Durchmesser der zweiten Düsenbohrung 45 der Auslaufdüse 43 an ihrer engsten Stelle 300 µm betragen. Durch eine solche Durchmesserstaffelung der Düsenbohrungen 35 und 45 sowie der Blendenöffnung 108 wird gewährleistet, daß am äußeren Rand der ersten Düsenbohrung 35 der Einlaufdüse 33 kein Streulicht auftritt und eine Berührung und eine dabei mögliche Verletzung der optischen Faser 1 beim Durchlauf durch die Blendenöffnung 108 sicher vermieden wird. In der ersten Düsenbohrung 33 ist nämlich die Strömungsgeschwindigkeit des beispielsweise zur Beschichtung der Faser 1 dienenden, in der ersten Düsenbohrung 33 stehenden UV-empfindlichen flüssigen Beschichtungsmaterials annähernd null und somit die Gefahr einer unerwünschten Vorvernetzung und/oder Vor-Aushärtung von Beschichtungsmaterial besonders groß.

In Durchlaufrichtung der Faser 1 zwischen der Einlaufdüse 33 und der Streulichtblende 107 ist ein Abstandsring 113 angeordnet, der eine Verschmutzung der Streulichtblende 107 bei eventuell auftretenden Prozeßproblemen verhindert. Auf diese Weise stützen sich die Streulichtblende 107, die Einlaufdüse 33 über den Abstandsring 113 sowie die Auslaufdüse 43 über die Ringdüse 61 in axialer Richtung der Durchlaufrichtung der Faser 1 entgegengerichtet an dem Halteabsatz 31 des Düsenhalters 13 ab.

## Patentansprüche

1. Vorrichtung zum Beschichten einer optischen Faser mit
- einem eine Längsbohrung aufweisenden Gehäuse,
- einem in dieser Längsbohrung angeordneten, eine Aufnahmebohrung aufweisenden Düsenhalter,
- einer Einlaufdüse mit einer ersten Düsenbohrung und einer Auslaufdüse mit einer zweiten Düsenbohrung, durch die die optische Faser hindurchführbar ist und die mit Abstand hintereinander in der Aufnahmebohrung des Düsenhalters angeordnet sind, und
- einem zwischen der Einlaufdüse und der Auslaufdüse gebildeten Beschichtungsraum zum Aufbringen eines Beschichtungsmaterials auf die optische Faser, dadurch gekennzeichnet, daß
- der Düsenhalter (13) in die Längsbohrung (11) des Gehäuses (3) eingepreßt ist und
- die Einlaufdüse (33) und die Auslaufdüse (43) in die Aufnahmebohrung (25) des Düsenhalters (13) eingepreßt sind.

2. Vorrichtung nach Anspruch 1, dadurch gekennzeichnet, daß der Düsenhalter (13) aus einem Werkstoff mit niedriger Gleitreibungszahl ausgebildet ist.

3. Vorrichtung nach Anspruch 1 oder 2, dadurch gekennzeichnet, daß das Gehäuse (3) im Bereich der Längsbohrung (11) zumindest in dem Abschnitt des Ein- und Auspressens des Düsenhalters (13) aus einem Werkstoff mit niedriger Gleitreibungszahl ausgebildet ist.

4. Vorrichtung nach einem der Ansprüche 1 bis 3, dadurch gekennzeichnet, daß die Einlaufdüse (33) und/oder die Auslaufdüse (43) zumindest an ihrem Umfang aus einem Werkstoff mit niedriger Gleitreibungszahl ausgebildet sind.

5. Vorrichtung nach einem der Ansprüche 1 bis 4, dadurch gekennzeichnet, daß der Düsenhalter (13) aus einem elastischen Kunststoff ausgebildet ist.

6. Vorrichtung nach einem der Ansprüche 1 bis 5, dadurch gekennzeichnet, daß das Gehäuse (3) im Bereich der Längsbohrung (11) zumindest in dem Abschnitt des Ein- und Auspressens des Düsenhalters (13) aus einem elastischen Kunststoff ausgebildet ist.

7. Vorrichtung nach einem der Ansprüche 1 bis 6, dadurch gekennzeichnet, daß die Einlaufdüse (33) und/oder die Auslaufdüse (43) zumindest an ihrem Umfang aus einem elastischen Kunststoff ausgebildet sind.

8. Vorrichtung nach einem der Ansprüche 2 bis 7, dadurch gekennzeichnet, daß als Werkstoff mit niedriger Gleitreibungszahl Polytetrafluorethylen verwendet ist.

9. Vorrichtung nach einem der Ansprüche 1 bis 8, dadurch gekennzeichnet, daß in Durchlaufrichtung der Faser (1) vor der Einlaufdüse (33) eine Streulichtblende (107) in die Aufnahmebohrung (25) des Düsenhalters (13) eingepreßt ist, durch deren Blendenöffnung (108) die Faser (1) hindurchführbar ist.

10. Vorrichtung nach Anspruch 9, dadurch gekennzeichnet, daß der Durchmesser der Blendenöffnung (108) der Streulichtblende (107) an ihrer engsten Stelle kleiner ist als der Durchmesser der ersten Düsenbohrung (35) der Einlaufdüse (33) an ihrer engsten Stelle und größer ist als der Durchmesser der zweiten Düsenbohrung (45) der Auslaufdüse (43) an ihrer engsten Stelle.

11. Vorrichtung nach einem der Ansprüche 1 bis 10, dadurch gekennzeichnet, daß die Vorrichtung durch in axialer Richtung wirkende Dichtringe (73, 79, 89, 95, 97, 99) nach außen hin abgedichtet ist.

## Claims

1. Apparatus for coating an optical fibre, having
- a housing having a longitudinal bore,
- a nozzle holder which is arranged in this longitudinal bore and has a receiving bore,
- an inlet nozzle with a first nozzle bore and an outlet nozzle with a second nozzle bore, through which the optical fibre can be guided and which are arranged at a distance one behind the other in the receiving bore of the nozzle holder, and
- a coating space formed between the inlet nozzle and the outlet nozzle for applying a coating material to the optical fibre, characterized in that
- the nozzle holder (13) is pressed into the longitudinal bore (11) of the housing (3), and
- the inlet nozzle (33) and the outlet nozzle (43) are pressed into the receiving bore (25) of the nozzle holder (13).

2. Apparatus according to Claim 1, characterized in that the nozzle holder (13) is made from a material with a low coefficient of sliding friction.

3. Apparatus according to Claim 1 or 2, characterized in that the housing (3), in the region of the longitudinal bore (11), is made, at least in the section where the nozzle holder (13) is pressed in and out, from a material with a low coefficient of sliding friction.

4. Apparatus according to one of Claims 1 to 3, characterized in that the inlet nozzle (33) and/or the outlet nozzle (43) are made, at least on their periphery, from a material with a low coefficient of sliding friction.

5. Apparatus according to one of Claims 1 to 4, characterized in that the nozzle holder (13) is made from an elastic synthetic material.

6. Apparatus according to one of Claims 1 to 5, characterized in that the housing (3), in the region of the longitudinal bore (11), is made, at least in the section where the nozzle holder (13) is pressed in and out, from an elastic synthetic material.

7. Apparatus according to one of Claims 1 to 6, characterized in that the inlet nozzle (33) and/or the outlet nozzle (43) is made, at least on its periphery, from an elastic synthetic material.

8. Apparatus according to one of Claims 2 to 7, characterized in that polytetrafluoroethylene is used as the material with a low coefficient of sliding friction.

9. Apparatus according to one of Claims 1 to 8, characterized in that, upstream of the inlet nozzle (33) in the passage direction of the fibre (1), a baffle plate (107) is pressed into the receiving bore (25) of the nozzle holder (13), through the aperture (108) of which baffle plate the fibre (1) can be guided.

10. Apparatus according to Claim 9, characterized in that the diameter of the aperture (108) of the baffle plate (107) is smaller at its narrowest point than the diameter of the first nozzle bore (35) of the inlet nozzle (33) at its narrowest point and is greater than the diameter of the second nozzle bore (45) of the outlet nozzle (43) at its narrowest point.

11. Apparatus according to one of Claims 1 to 10, characterized in that the apparatus is sealed towards the outside by means of sealing rings (73, 79, 89, 95, 97, 99) acting in the axial direction.

## Revendications

1. Dispositif de revêtement d'une fibre optique comportant
- un boîtier présentant un perçage longitudinal,
- un porte-filières disposé dans ce perçage longitudinal, et présentant un perçage de positionnement,
- une filière d'entrée comportant un premier perçage de filière et une filière de sortie comportant un deuxième perçage de filière, par lesquels passe la fibre optique et qui sont disposés à distance l'un derrière l'autre dans le perçage de positionnement du porte-filières, et
- un espace de revêtement formé entre la filière d'entrée et la filière de sortie pour appliquer une matière de revêtement sur la fibre optique,
caractérisé en ce que
- le porte-filières (13) est introduit par pression dans le perçage longitudinal (11) du boîter (3) et
- la filière d'entrée (33) et la filière de sortie (43) sont introduites par pression dans le perçage de positionnement (25) du porte-filières (13).

2. Dispositif suivant la revendication 1, caractérisé en ce que le porte-filières (13) est réalisé en une matière ayant un faible coefficient de frottement de glissement.

3. Dispositif suivant la revendication 1 ou 2, caractérisé en ce que le boitier (3) est réalisé dans la zone du perçage longitudinal (11), au moins dans la section de l'introduction et de l'extraction par pression du porte-filières (13), en une matière ayant un faible coefficient de frottement de glissement.

4. Dispositif suivant l'une des revendications 1 à 3, caractérisé en ce que la filière d'entrée (33) et/ou la filière de sortie (43) sont réalisées au moins à leur pourtour en une matière ayant un faible coefficient de frottement de glissement.

5. Dispositif suivant l'une des revendications 1 à 4, caractérisé en ce que le porte-filières (13) est réalisé en un plastique élastique.

6. Dispositif suivant l'une des revendications 1 à 5, caractérisé en ce que le boîtier (3) est réalisé à partir d'un plastique élastique dans la zone du perçage longitudinal (11), au moins dans la section de l'introduction et de l'extraction par pression du porte-filières (13).

7. Dispositif suivant l'une des revendications 1 à 6, caractérisé en ce que la filière d'entrée (33) et/ou la filière de sortie (43) sont réalisées à partir d'une matière élastique au moins sur leur pourtour.

8. Dispositif suivant l'une des revendications 2 à 7, caractérisé en ce que du polytétrafluoréthylène est utilisé comme matière ayant un faible coefficient de frottement de glissement.

9. Dispositif suivant l'une des revendications 1 à 8, caractérisé en ce qu'un diaphragme anti-lumière diffusée (107) est introduit par pression dans le perçage de positionnement (25) du porte-filières (13), avant la filière d'entrée (33) suivant le sens de défilement de la fibre (1), la fibre (1) pouvant passer par l'ouverture de diaphragme (108) dudit diaphragme.

10. Dispositif suivant la revendication 9, caractérisé en ce que le diamètre de l'ouverture de diaphragme (108) du diaphragme anti-lumière diffusée (107) est inférieur à son point le plus étroit, au diamètre du premier perçage de filière (35) de la filière d'entrée (33) à son point le plus étroit, et supérieur au diamètre du deuxième perçage de filière (45) de la filière de sortie (43) à son point le plus étroit.

11. Dispositif suivant l'une des revendications 1 à 10, caractérisé en ce que le dispositif est étanché vers l'extérieur par des bagues d'étanchéité (73, 79, 89, 95, 97, 99) agissant suivant la direction axiale.
